(19) Europäisches Patentamt
European Patent Office
Office européen des brevets

(11) EP 0 862 059 B1

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(51) Int Cl.⁷: **G01P 15/08**, B60R 21/00, G01P 1/00

(21) Anmeldenummer: **98102996.0**

(22) Anmeldetag: **20.02.1998**

(54) **Verfahren zur Bewertung fahrdynamischer Daten im Hinblick auf ein Unfallereignis**

Method for evaluating movement data of a vehicle with regard to an accident

Procédé d'évaluation de données de mouvement d'un véhicule en vue d'un accident

(84) Benannte Vertragsstaaten:
**AT BE CH DE FR GB LI NL SE**

(30) Priorität: **27.02.1997 DE 19707856**

(43) Veröffentlichungstag der Anmeldung:
**02.09.1998 Patentblatt 1998/36**

(73) Patentinhaber: **SIEMENS AKTIENGESELLSCHAFT**
**80333 München (DE)**

(72) Erfinder:
- **Hertzner, Alfred, Dr. Dipl.-Physiker**
  **78089 Unterkirnach (DE)**
- **Staiger, Maik, Dipl.-Ing. (FH)**
  **78727 Oberndorf-Boll (DE)**

(56) Entgegenhaltungen:
**EP-A- 0 118 818**
**EP-A- 0 709 257**
**US-A- 5 363 302**
**US-A- 5 546 307**
**US-A- 5 629 847**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 862 059 B1

**Beschreibung**

Die Erfindung betrifft ein Verfahren zur Bewertung fahrdynamischer Daten im Hinblick auf ein Unfallereignis, wobei von einer im Fahrzeug angeordneten Steuereinheit von Sensoren erfasste Daten $a_l$ für die Längsbeschleunigung und $a_q$ für die Querbeschleunigung des Fahrzeugs in einem zeitlichen Takt mit der Abtastrate $f_a$ eingelesen werden, wobei die aktuelle, durch die Beschleunigungsdaten $a_l$ und $a_q$ gezeichnete Fahrsituation des Fahrzeugs bewertet wird.

Ein gattungsgemäßes Verfahren ist aus der Druckschrift EP 0 118 818 B1 bekannt. Dort erfassen Sensoren die Beschleunigung eines Fahrzeugs in dessen Längs- und Querrichtung. Eine im Fahrzeug angeordnete Steuereinheit tastet die sensorisch erfassten Daten kontinuierlich in einem festen Takt ab und prüft, ob diese Daten vorgegebene Schwellwerte überschreiten. Wenn die Steuereinheit kritisch veränderte Daten ermittelt, wertet sie die vorliegende Fahrsituation als Unfall und löst ein so genanntes Triggersignal aus, um Maßnahmen zur dauerhaften Speicherung derjenigen fahrdynamischen Daten einzuleiten, die zu dieser Fahrsituation gehören.

Ein solches Verfahren erfordert in der Praxis deren individuelle Anpassung an das Fahrzeug, in dem es zum Einsatz kommt, was für die Handhabung von Geräten, die dieses Verfahren anwenden, nachteilig ist. PKWs, LKWs, Busse und Geländefahrzeuge sind in ihren kinetischen Eigenschaften so unterschiedlich, dass sich Verfahren, die eine Fahrsituation allein auf der Grundlage von Schwellwertüberschreitungen von Beschleunigungsdaten beurteilen, als unbefriedigend erwiesen haben, weil durch die starren Schwellwertvorgaben optimale Empfindlichkeitseinstellungen zur Auslösung eines Triggersignals nur aufwendig erreichbar sind.

Aus der japanischen Offenlegungsschrift JP-A-7186876 ist die Auslösung eines Triggerereignisses bekannt, welcher verschiedene Einzelbewertungen zugrunde liegen, deren Ergebnisse nachfolgend zur Berechnung einer Gesamtbewertung gewichtet miteinander verknüpft werden. Auch das dort vorgeschlagene Verfahren bietet nur eine unzureichende Annäherung der Schwelle eines Unfallsereignisses an den normalen Fahrbetrieb.

Es ist Aufgabe der vorliegenden Erfindung, ein Verfahren zur Bewertung fahrdynamischer Daten im Hinblick auf ein Unfallereignis dahingehend zu verbessern, daß es von sich aus über eine größere Anpassungsfähigkeit verfügt und einsatzabhängig die bestmögliche Empfindlichkeit besitzt.

Die Aufgabe wird durch die Merkmale des ersten Anspruchs gelöst. Die abhängigen Ansprüche zeigen vorteilhafte Ausgestaltungen der gefundenen Lösung.

Das gefundene Verfahren geht zwar ebenfalls von der Erfassung der Längsund Querbeschleunigung des Fahrzeugs aus, wobei die von den entsprechenden Sensoren erfaßten Daten a, für die Längsbeschleunigung und $a_q$ für die Querbeschleunigung in einem zeitlichen Takt mit der Abtastrate $f_a$ von einer im Fahrzeug angeordneten Steuereinheit eingelesen werden. Die aktuelle Fahrsituation mit den Beschleunigungsdaten $a_l$ und $a_q$ wird aber anschließend bewertet, indem für jeden Datenerfassungszeitpunkt $t_i$ eine Bewertungsfunktion $\mu(t_i)$ berechnet wird, die damit die vorliegende Fahrsituation gewichtet und sie im Vergleich zu anderen Fahrsituationen rangmäßig skalierbar macht. Fällt die Bewertung derart aus, daß die Bewertungsfunktion zum ersten Mal einen Wert für $\mu(t_i) > 0$ ergibt, so ist damit der Beginn eines im Hinblick auf ein Unfallgeschehen ausreichend relevanten Ereignisses gekennzeichnet. Die Steuereinheit kann nun je nach ihrer Zweckbestimmung diverse Steuerbefehle erlassen.

Im einzelnen wird dabei folgendermaßen vorgegangen: Die Steuereinheit berechnet aus den erfaßten Beschleunigungsdaten $a_l$ und $a_q$ für einen vom Erfassungszeitpunkt $t_i$ abhängigen Zeitraum $[t_i - \Delta t, t_i]$ eine mittlere Beschleunigung $\bar{a}(t)$ und eine auf die Dauer $\Delta t$ dieses Zeitraums sowie die Einheitsmasse m normierte sowie auf die Eintrittsgeschwindigkeit $\vec{v}(t_i - \Delta t)$ bezogene Leistung L(t) der kinetischen Energie $E_{kin}$. Die Dauer $\Delta t$ des Zeitraums $[t_i - \Delta t, t_i]$ liegt in der Praxis im Bereich von weniger als 100 ms. Die wie vorstehend normierte Leistung L(t) der kinetischen Energie $E_{kin}$ ist als

$$L(t) = \frac{\bar{a}(t)}{\Delta t} \cdot \int_{t-\Delta t}^{t} \bar{a}(\tau) d\tau$$

definiert, wobei $\tau$ die Integrationsvariable ist. Jede der beiden Größen $\bar{a}(t)$ und L(t) werden dann einzeln bewertet. Aus den beiden Teilbewertungen $\mu_a$ für die mittlere Beschleunigung $\bar{a}(t)$ und $\mu_L$ für die Leistung L(t) wird anschließend eine Gesamtbewertung $\mu(t)$ errechnet.

Die beiden Größen $\bar{a}(t)$ und L(t) werden für jeden Erfassungszeitpunkt $t_i$ wie folgt berechnet:

$$\text{(I)} \qquad \bar{a}(t_i) := \frac{1}{N_{\Delta t}+1}\sqrt{\left(\sum_{j=i-N_{\Delta t}}^{i} a_l(t_j)\right)^2 + \left(\sum_{j=i-N_{\Delta t}}^{i} a_q(t_j)\right)^2}$$

$$\text{(II)} \qquad L(t_i) := \frac{1}{N_{\Delta t}+1}\left| a_l(t_i)\sum_{j=i-N_{\Delta t}}^{i} a_l(t_j) + a_q(t_i)\sum_{j=i-N_{\Delta t}}^{i} a_q(t_j)\right|$$

In diesen Formeln bezeichnet j einen Laufindex und die Abkürzung $N_{\Delta t}$ das Produkt aus der Dauer $\Delta t$ des Zeitraums $[t_i - \Delta t, t_i]$ und der Abtastrate $f_a$, also $N_{\Delta t} = \Delta t * fa$ ; die Abtastfrequenz läßt sich auch schreiben als $f_a = 1 / (t_i - t_{i-1})$, wobei $t_i$ den einzelnen Abtastzeitpunkt bezeichnet.

Beide Größen $\bar{a}(t_i)$ und $L(t_i)$ werden vorzugsweise mit der gleichen Funktion $f_\mu$ bewertet, wobei diese Funktion jeweils einen Parameter $a_s$ beziehungsweise $L_s$ enthält. Daraus ergeben sich die Teilbewertungen $\mu_a(t_i)$ und $\mu_L(t_i)$:

$$\text{(III)} \qquad \mu_a(t_i) = f_\mu(\bar{a}(t_i),a_s) \text{ und } \mu_L(t_i) = f_\mu(L(t_i),L_s)$$

Die Parameter $a_s$ und $L_s$ bezeichnen Schrankenwerte für die Größen $\bar{a}(t_i)$ und $L(t_i)$, deren Überschreitung erfahrungsgemäß eine kritische Fahrsituation vermuten läßt. In allgemeiner Form bezeichnet die Funktion $f_\mu(x, x_s)$ eine stückweise lineare Funktion mit einem Wertebereich zwischen 0 und 1, die vorzugsweise bis 85 % von $x_s$ gleich Null ist, dann bis 100 % von $x_s$ auf den Wert 0,7 und schließlich bis 150 % von $x_s$ auf den Maximalwert 1 ansteigt, wie es auch die **Figur 1** zeigt. Grundsätzlich kann auch ein von diesem Beispiel abweichender Funktionsverlauf für $f_\mu$ festgelegt werden, wenn dieses vorteilhaft erscheint. Für die Erfindung ist nur wesentlich, daß die Größen $\bar{a}(t_i)$ und $L(t_i)$ anhand einer Funktion $f_\mu$ bewertet werden, um aus den erfaßten beziehungsweise daraus errechneten Daten zu einer Aussage über die Gewichtung der vorliegenden Fahrsituation zu gelangen.

Aus den Teilbewertungen $\mu_a(t_i)$ und $\mu_L(t_i)$ wird eine Gesamtbewertung $\mu(t_i)$ berechnet, indem das Minimum beider Teilbewertungen $\mu_a(t_i)$ und $\mu_L(t_i)$ mit einem Steuerparameter s multipliziert und sodann der arithmetische Mittelwert aus beiden Teilbewertungen $\mu_a(t_i)$ und $\mu_L(t_i)$ multipliziert mit dem Faktor (1 - s) zu diesem Produkt hinzuaddiert wird:

$$\text{(IV)} \qquad \mu(t_i) = s \cdot \min(\mu_a(t_i), \mu_L(t_i)) + (1-s) \cdot \frac{\mu_a(t_i) + \mu_L(t_i)}{2}$$

Diese Verknüpfung (IV) bildet im Sinn der Fuzzy Logik ein Fuzzy-and, wobei der Parameter s die Orientierung vom arithmetischen Mittel zur Minimumsbildung steuert. Diese Vorgehensweise wird beispielsweise erläutert in H. Bothe, Fuzzy Logik, Springer-Verlag Berlin Heidelberg 1993. Wenn der Steuerparameter beispielsweise zu s = 0,5 gewählt wird, ergibt sich für die Gesamtbewertung $\mu(t_i)$ ein funktionales Verhalten, wie es in der **Figur 2** dargestellt ist. Anhand dieser Gesamtbewertung kann recht zuverlässig festgestellt werden, ob ein Ereignis vorliegt, das veranlaßt durch die Steuereinheit beispielsweise eine dauerhafte Speicherung der zu dieser Fahrsituation gehörenden fahrdynamischen Daten rechtfertigt.

Für manche Anwendungen, zum Beispiel bei einem Unfalldatenspeicher, kann es vorteilhaft sein, in die Bewertung der Fahrsituation auch einzubeziehen, ob unmittelbar nach dem Eintritt des Ereignisses das Fahrzeug zum Stillstand kommt oder ob der Warnblinker des Fahrzeugs betätigt wird, denn dies ist ein zusätzlicher Hinweis auf die Relevanz der vorliegenden Daten. Der Ereigniseintritt ist dadurch gekennzeichnet, daß die Gesamtbewertung $\mu(t_i)$ erstmals einen Wert größer Null annimmt.

Tritt eines dieser Zusatzkriterien in einer Zeitspanne $\Delta t_n$ bzw. innerhalb einer Wegstrecke $\Delta s$ nach dem bewerteten Ereignis $\mu(t_i)$ auf, so erfolgt eine nachträgliche Aufwertung des entsprechenden Ereignisses, bei einem Fahrzeugstillstand beispielsweise gemäß $\mu_{still} = \min(\mu(t_i) + 0{,}2 ; 1)$.

Als Stillstand kann betrachtet werden, wenn nach dem Ereignis beispielsweise für mindestens 2 Sekunden die Fahrzeuggeschwindigkeit v unter v < 1 km/h und die betragsmäßigen Veränderungen der Beschleunigungen $a_l$

und $a_q$ zwischen 2 benachbarten Erfassungszeitpunkten auf unter $\Delta a = 0{,}8\ m/s^2$ absinken.

Wird innerhalb einer Wegstrecke von s = 100 m nach dem Ende des bewerteten Ereignisses der Warnblinker betätigt, so kann die Bewertung nach $\mu_{wam} = \min(\mu(t_i) + 0{,}5\ ;1)$ aufgewertet werden.

Beide hier beispielhaft aufgezeigten Maßnahmen führen durch eine Nachbewertung der Ereignisdaten zu einer Erhöhung der Gesamtbewertung $\mu(t_i)$. Auch Verknüpfungen mit anderen Zusatzinformationen können sinnvoll sein.

Das hier beschriebene Verfahren zur Bewertung fahrdynamischer Daten im Hinblick auf ein Unfallereignis ist nicht auf die Verwendung in einem Unfalldatenspeicher beschränkt, dessen Aufgabe darin besteht, Daten zu sammeln, um einen Unfallhergang rekonstruierbar zu machen, sondern kann auch überall dort zum Einsatz gelangen, wo fahrdynamische Daten eines Fahrzeugs im Hinblick auf ein Unfallereignis auszuwerten sind, was beispielsweise auch bei automatischen Notrufeinrichtungen zur Anforderung von Rettungsdiensten oder ähnlichen Anwendungen der Fall sein kann.

Der Begriff des Unfalls" soll hier so verstanden werden, daß er auch Daten von Situationen einschließt, die auf eine materialschädigende Fahrweise schließen lassen. Ein Unfall im Sinne dieser Erfindung ist daher jede Situation, die im normalen Bewegungsablauf des Fahrzeugs in potentiell schädigender Weise plötzlich auftritt und diesen gegebenenfalls unterbricht. Daten, die zu derselben Unfallsituation gehören und damit in einem zeitlichen Zusammenhang stehen, charakterisieren dann das Unfallereignis.

Ein besonderer Vorteil des vorgeschlagenen Verfahrens besteht darin, daß unfallrelevante Daten möglichst gut von normalen Fahrsituationen getrennt werden. Das Verfahren ermöglicht es, die Empfindlichkeit des Gerätes abzusenken, da die Bewertung letztlich über die Relevanz der erfaßten Daten entscheidet. Dadurch können grundsätzlich auch Unfälle mit kleinerem Impulsübertrag besser erfaßt werden, ohne häufige Fehltriggerungen befürchten zu müssen. Da jede Triggerung infolge unfallrelevanter Daten zu einer Datenspeicherung führt, wird ein das Verfahren anwendendes Gerät nicht mit unbedeutenden Daten belastet, da das Verfahren das Trennungsverhalten verbessert, was andernfalls zu Lasten der Funktionstüchtigkeit des Gerätes gehen könnte. Das Verfahren vermeidet starre fahrzeugabhängige Schwellwerteinstellungen für die einzelnen Parameter, wodurch der Einsatz des Gerätes flexibler und in der Handhabung vereinfacht wird.

**Patentansprüche**

1. Verfahren zur Bewertung fahrdynamischer Daten im Hinblick auf ein Unfallereignis, wobei von einer im Fahrzeug angeordneten Steuereinheit von Sensoren erfasste Daten $a_l$ für die Längsbeschleunigung und $a_q$ für die Querbeschleunigung des Fahrzeugs in einem zeitlichen Takt mit der Abtastrate $f_a$ eingelesen werden, wobei die aktuelle, durch die Beschleunigungsdaten $a_l$ und $a_q$ gekennzeichnete Fahrsituation des Fahrzeugs bewertet wird, **dadurch gekennzeichnet,**

   - **dass** die Steuereinheit für jeden Datenerfassungszeitpunkt $t_i$ eine Bewertungsfunktion $\mu(t_i)$ berechnet, die die vorliegende Fahrsituation in zu anderen Fahrsituationen vergleichbarer Weise gewichtet,
   - **dass** die Steuereinheit aus den erfassten Beschleunigungsdaten $a_l$ und $a_q$ für einen vom Erfassungszeitpunkt $t_i$ abhängigen Zeitraum $[t_i - \Delta t; t_i]$ eine mittlere Beschleunigung $\bar{a}(t)$ und eine auf die Dauer $\Delta t$ dieses Zeitraums sowie die Einheitsmasse m normierte sowie auf die Eintrittsgeschwindigkeit $v \cdot [t_i - \Delta t]$ bezogene Leistung $L(t)$ der aus der Definition

$$L(t) = \frac{\vec{a}(t)}{\Delta t} \cdot \int_{t-\Delta t}^{t} \vec{a}(\tau) d\tau$$

     gegebenen kinetischen Energie $E_{kin}$ berechnet, wobei $\tau$ die Integrationsvariable ist,
   - **dass** jede der Größen $\bar{a}(t)$ und $L(t)$ zunächst einzeln bewertet und dann aus den beiden Teilbewertungen $\mu_a$ für die mittlere Beschleunigung $\bar{a}(t)$ und $\mu_L$ für die Leistung $L(t)$ anschließend eine Gesamtbewertung $\mu(t)$ errechnet wird.

2. Verfahren nach Anspruch 1,
   **dadurch gekennzeichnet,**
   **dass** die beiden Größen $\bar{a}(t)$ und $L(t)$ für jeden Erfassungszeitpunkt $t^i$ wie folgt berechnet werden:

$$\bar{a}(t_i) := \frac{1}{N_{\Delta t}+1}\sqrt{\left(\sum_{j=i-N_{\Delta t}}^{i} a_l(t_j)\right)^2 + \left(\sum_{j=i-N_{\Delta t}}^{i} a_q(t_j)\right)^2}$$

und

$$L(t_i) := \frac{1}{N_{\Delta t}+1}\left| a_l(t_i)\sum_{j=i-N_{\Delta t}}^{i} a_l(t_j) + a_q(t_i)\sum_{j=i-N_{\Delta t}}^{i} a_q(t_j)\right| ,$$

wobei in diesen Formeln j einen Laufindex und die Abkürzung $N_{\Delta t}$ das Produkt aus der Dauer $\Delta t$ des Zeitraumes $[t_i - \Delta t; t_i]$ und der Abtastrate $f_a$ bezeichnet, also $N_{\Delta t} = \Delta t \cdot f_a = \Delta t/(t_i - t_{i-1})$ mit $t_i$ als dem einzelnen Abtastzeitpunkt.

**3.** Verfahren nach Anspruch 1, **dadurch gekennzeichnet, dass** die Größen $\bar{a}(t_i)$ und $L(t_i)$ mit einer Funktion $f_\mu$ bewertet werden, die einen Parameter $a_s$ beziehungsweise $L_s$ enthält, so dass die Teilbewertungen $\mu_a(t_i)$ und $\mu_L(t_i)$ zu $\mu_a(t_i) = f_\mu(\bar{a}(t_i), a_s)$ und $\mu_L(t_i) = f_\mu(L(t_i), L_s)$ ergeben, wobei die Parameter $a_s$ und $L_s$ für die Größen $\bar{a}(t_i)$ und $L(t_i)$ Schrankenwerte bezeichnen, deren Überschreitung erfahrungsgemäß eine kritische Fahrsituation vermuten lässt.

**4.** Verfahren nach Anspruch 3, **dadurch gekennzeichnet, dass** die Funktion $f_\mu$ eine stückweise lineare Funktion mit einem Wertebereich zwischen 0 und 1 ist.

**5.** Verfahren nach Anspruch 4, **dadurch gekennzeichnet**, das die Funktion $f_\mu$ - allgemein geschrieben als $f_\mu(x, x_s)$ - bis 85 % von $x_s$ gleich Null ist, dann bis 100 % von $x_s$ auf den Wert 0,7 und schließlich bis 150 % von $x_s$ auf den Maximalwert 1 ansteigt.

**6.** Verfahren nach Anspruch 1 oder einem der nachfolgenden Ansprüche, **dadurch gekennzeichnet, dass** aus den Teilbewertungen $\mu_a(t_i)$ und $\mu_L(t_i)$ eine Gesamtbewertung $\mu(t_i)$ wie folgt berechnet wird:

$$\mu(t_i) = s \cdot \min(\mu_a(t_i), \mu_L(t_i)) + (1-s)\frac{\mu_a(t_i)+\mu_L(t_i)}{2},$$

wobei s einen Steuerparameter bezeichnet, der im Sinne der Fuzzy Logik die Orientierung vom arithmetischen Mittel zu Miniumsbildung steuert.

**7.** Verfahren nach einem der vorangegangenen Ansprüchen, **dadurch gekennzeichnet, dass** in die Bewertung der Fahrsituation einbezogen wird, ob unmittelbar nach dem Eintritt des Ereignisses das Fahrzeug zum Stillstand kommt oder ob der Warnblinker des Fahrzeugs betätigt wird, wobei der Ereigniseintritt **dadurch gekennzeichnet ist, dass** die Gesamtbewertung $\mu(t_i)$ erstmals einen Wert größer Null annimmt.

**8.** Verfahren nach Anspruch 7, **dadurch gekennzeichnet, dass** das Ereignis gemäß $\mu_{stilll} = \min(\mu(t_i)+0{,}2;1)$ aufgewertet wird, wenn in einer Zeitspanne $\Delta t_n$ oder innerhalb einer Wegstrecke $\Delta s$ nach dem bewerteten Ereignis $\mu(t_i)$ ein Fahrzeugstillstand eintritt, wobei als Stillstand gilt, wenn nach dem Ereignis für mindestens 2 Sekunden die Fahrzeuggeschwindigkeit v unter v < 1km/h und die be tragsmäßigen Veränderungen der Beschleunigungen a' und $a_q$ zwischen 2 benachbarten Erfassungszeitpunkten auf ununter $\Delta a$ = 0,8 m/s$^2$ absinken.

**9.** Verfahren nach Anspruch 7, **dadurch gekennzeichnet, dass** das Ergebnis gemäß $\mu_{warn} = \min(\mu(t_i)+0{,}5;1)$ aufgewertet wird, wenn innerhalb einer Wegstrecke von s = 100 m nach dem Ende des bewerteten Ereignisses der Warmblinker betätigt wird.

## Claims

**1.** Method for evaluating vehicle movement dynamic data with respect to an accident event, data $a_l$ for the longitudinal

acceleration and $a_q$ for the transverse acceleration of the vehicle, sensed by sensors, being read in with a timing clock with the sampling rate $f_a$ by a control unit which is arranged in the vehicle, the current driving situation of the vehicle which is **characterized by** the acceleration data $a_l$ and $a_q$ being evaluated, **characterized**

- **in that** the control unit calculates, for each data-sensing time $t_i$, an evaluation function $\mu(t_i)$ which weights the present driving situation in a way which can be compared with other driving situations,
- **in that** the control unit calculates, from the sensed acceleration data $a_i$ and $a_q$ for a time period $[t_i - \Delta t; t_i]$ which is dependent on the sensing time $t_i$, an average acceleration $\bar{a}(t)$ and a power $\bar{L}(t)$, standardized to the duration $\Delta t$ of this time period and to the unit mass m and referring to the entry speed $v \cdot [t_i - \Delta t]$, of the kinetic energy $E_{kin}$ which is obtained from the definition

$$L(t) = \frac{\bar{a}(t)}{\Delta t} \cdot \int_{t-\Delta t}^{t} \bar{a}(\tau)\,d\tau$$

  $\tau$ being the integration variable,
- **in that** each of the variables $\bar{a}(t)$ and L(t) is initially evaluated individually and then an overall evaluation $\mu(t)$ is calculated from the two partial evaluations $\mu_a$ for the average acceleration $\bar{a}(t)$ and $\mu_L$ for the power L(t).

**2.** Method according to Claim 1, **characterized in that** the two variables $\bar{a}(t)$ and $L^{(t)}$ are calculated for each sensing time $t^i$ as follows:

$$\bar{a}(t_i) := \frac{1}{N_{\Delta t} + 1} \sqrt{\left(\sum_{j=i-N_{\Delta t}}^{i} a_l(t_j)\right)^2 + \left(\sum_{j=i-N\Delta t}^{i} a_q(t_j)\right)^2}$$

and

$$L(t_i) := \frac{1}{N_{\Delta t} + 1} \left| a_l(t_i) \sum_{j=i-N_{\Delta t}}^{i} a_l(t_j) + a_q(t_i) \sum_{j=i-N_{\Delta t}}^{i} a_q(t_j) \right| ,$$

in which formulas j is a serial index and the abbreviation $N_{\Delta 1}$ is the product of the duration $\Delta t$ of the time period $[t_i - \Delta t; t_i]$ and the sampling rate $f_a$, that is to say $N_{\Delta t} = \Delta t \cdot f_a = \Delta t/(t_i - t_{i-1})$ with $t_i$ as the individual sampling time.

**3.** Method according to Claim 1, **characterized in that** the variables $\bar{a}(t_i)$ and $L(t_i)$ are evaluated with a function $f_\mu$ which contains a parameter $a_s$ or $L_s$ so that the partial evaluations $\mu_a(t_i)$ and $\mu_L(t_i)$ are obtained as $\mu_a(t_i) = f_\mu(\bar{a}(t_i), a_s)$ and $\mu_L(ti) = f_\mu(L(t_i), L_s)$, the parameters $a_s$ and $L_s$ for the variables $\bar{a}(t_i)$ and $L(t_i)$ being boundary values whose upward transgression has empirically been found to imply a critical driving situation.

**4.** Method according to Claim 3, **characterized in that** that the function $f_\mu$ is a partially linear function with a value range between 0 and 1.

**5.** Method according to Claim 4, **characterized in that** the function $f_\mu$ - generally written as $f_\mu(x,x_s)$ - is equal to zero up to 85% of $x_s$, and then rises to the value 0.7 up to 100% of $x_s$, and finally rises to the maximum value 1 up to 150% of $x_s$.

**6.** Method according to Claim 1 or one of the following claims, **characterized in that** an overall evaluation $\mu(t_i)$ is calculated from the partial evaluations $\mu_a(t_i)$ and $\mu_L(t_i)$ as follows:

$$\mu(t_i) = s \cdot \min(\mu_a(t_i), \mu_L(t_i)) + (1-s)\frac{\mu_a(t_i)+\mu_L(t_i)}{2},$$

s being a control parameter which controls the orientation of the arithmetic mean in the sense of fuzzy logic in order to form minimum values.

**7.** Method according to one of the preceding claims, **characterized in that** the evaluation of the driving situation includes whether the vehicle enters a stationary state directly after the occurrence of the event or whether the hazard warning light of the vehicle is activated, the occurrence of the event being **characterized in that** the overall evaluation $\mu(t_i)$ assumes a value greater than zero for the first time.

**8.** Method according to Claim 7, **characterized in that** the event is enhanced according to $\mu_{still} = \min(\mu(t_i) + 0.2;1)$, if a vehicle stationary state occurs in a time period $\Delta t_n$ or within a distance $\Delta s$ after the evaluated event $\mu(t_i)$, a stationary state occurring if, after the event, the vehicle speed v drops below $v < 1$ km/h for at least two seconds and the changes in the accelerations a' and $a_q$ in absolute terms drop to less than $\Delta a = 0.8\ m/s^2$ between two adjacent sensing times.

**9.** Method according to Claim 7, **characterized in that** the event is enhanced according to $\mu_{warn} = \min(\mu(t_i) + 0.5;1)$ if the hazard warning light is activated within a distance of s = 100 m after the end of the evaluated event.

## Revendications

**1.** Procédé pour l'évaluation de données de la dynamique de mouvement par rapport à un événement d'accident, des données $a_l$ pour l'accélération longitudinale et $a_q$ pour l'accélération transversale du véhicule, saisies par des capteurs, étant lues en cadence temporelle, avec le taux de balayage $f_a$, par une unité de commande, disposée dans le véhicule, la situation de conduite actuelle du véhicule, indiquée par les données d'accélération $a_l$ et $a_q$, étant évaluée, **caractérisé,**

- **en ce que** l'unité de commande calcule pour chaque instant de saisie de données $t_i$ une fonction d'évaluation $\mu(t_i)$ qui pondère la présente situation de conduite d'une façon comparable à d'autres situations de conduite,
- **en ce que** l'unité de commande calcule à partir des données d'accélération saisies $a_l$ et $a_q$ pour une période de temps $[t_i - \Delta t\ ;\ t_i]$ dépendante de l'instant de saisie $t_i$ une accélération moyenne $\bar{a}(t)$ et une puissance L(t), normalisée par rapport à la durée $\Delta t$ de cette période et par rapport à la masse unifiée m et rapportée à la vitesse d'entrée $v[t_i - \Delta t]$, de l'énergie $E_{cin}$ cinétique donnée par la définition

$$L(t) = \frac{\bar{a}(t)}{\Delta t} \cdot \int_{t-\Delta t}^{t} \bar{a}(\tau)\,d\tau$$

  $\tau$ étant la variable d'intégration,
- et **en ce que** chacune des grandeurs $\bar{a}(t)$ et L(t) est évaluée d'abord individuellement et ensuite une évaluation globale $\mu(t)$ est calculée à partir des deux évaluations partielles $\mu_a$ pour l'accélération moyenne $\bar{a}(t)$ et $\mu_L$ pour la puissance L(t).

**2.** Procédé selon la revendication 1,
**caractérisé en ce que**
les deux grandeurs $\bar{a}(t)$ et $L^{(t)}$ pour chaque instant de saisie $t_i$ sont calculées de la façon suivante :

$$\bar{a}(t_i) := \frac{1}{N_{\Delta t}+1}\sqrt{\left(\sum_{j=i-N_{\Delta t}}^{i} a_l(t_j)\right)^2 + \left(\sum_{j=i-N_{\Delta t}}^{i} a_q(t_j)\right)^2}$$

et

$$L(t_i) := \frac{1}{N_{\Delta t}+1}\left| a_l(t_i) \sum_{j=i-N_{\Delta t}}^{i} a_l(t_j) + a_q(t_i) \sum_{j=i-N_{\Delta t}}^{i} a_q(t_j)\right|$$

j signifiant dans ces formules un indice de marche et l'abréviation $N_{\Delta t}$ le produit de la durée $\Delta t$ de la période [$t_i$ - $\Delta t$ ; $t_i$] et du taux de balayage $f_a$, donc $N_{\Delta t} = \Delta t \cdot f_a = \Delta t/(t_i - t_{i-1})$ avec $t_i$ comme l'instant de balayage individuel.

**3.** Procédé selon la revendication 1, **caractérisé en ce que** les grandeurs $\bar{a}(t_i)$ et $L(t_i)$ sont évaluées avec une fonction $f_\mu$ qui contient un paramètre $a_s$ resp. $L_s$, de sorte que les évaluations partielles $\mu_a(t_i)$ et $\mu_L(t_i)$ permettent d'obtenir $\mu_a(t_i) = f_\mu(\bar{a}(t_i), a_s)$ et $\mu_L(t_i) = f_\mu(L(t_i), L_s)$, les paramètres $a_s$ et $L_s$ désignant des valeurs limites pour les grandeurs $\bar{a}(t_i)$ et $L(t_i)$ dont le dépassement permet de supposer empiriquement une situation de conduite critique.

**4.** Procédé selon la revendication 3, **caractérisé en ce que** la fonction $f_\mu$ est une fonction linéaire par morceaux avec un intervalle de valeurs entre 0 et 1.

**5.** Procédé selon la revendication 4, **caractérisé en ce que** la fonction $f_\mu$ - écrite généralement sous la forme $f_\mu(x, x_s)$ - est jusqu'à 85 % de $x_s$ égale à zéro, puis augmente jusqu'à 100 % de $x_s$ à la valeur 0,7 et enfin jusqu'à 150 % de $x_s$ à la valeur maximale 1.

**6.** Procédé selon la revendication 1 ou l'une des revendications suivantes, **caractérisé en ce que** à partir des évaluations partielles $\mu_a(t_i)$ et $\mu_L(t_i)$, on calcule une évaluation globale $\mu(t_i)$ de la façon suivante :

$$\mu(t_i) = s.\min(\mu_a(t_i), \mu_L(t_i)) + (1-s)\frac{\mu_a(t_i)+\mu_L(t_i)}{2}$$

s désignant un paramètre de commande qui commande, au le sens de la logique floue, l'orientation entre moyenne arithmétique et valeur minimale.

**7.** Procédé selon l'une quelconque des revendications précédentes, **caractérisé en ce qu'**on inclut dans l'évaluation de la situation de conduite le fait que le véhicule s'arrête immédiatement après la survenance de l'événement ou que les feux de détresse du véhicule sont actionnés, la survenance de l'événement étant **caractérisée par le fait que** l'évaluation globale $\mu(t_i)$ prend pour la première fois une valeur supérieure à zéro.

**8.** Procédé selon la revendication 7, **caractérisé en ce que** l'événement est revalorisé selon $\mu_{arrêt} = \min(\mu(t_i) + 0,2 ; 1)$, lorsqu'un arrêt du véhicule survient dans un laps de temps $\Delta t_n$ ou dans les limites d'une distance $\Delta s$ après l'événement $\mu(t_i)$ évalué, où l'on considère comme arrêt le fait que la vitesse du véhicule v est inférieure à 1 km/h après l'événement pour au moins 2 secondes et si les variations en valeur des accélérations $a_l$ et $a_q$ descendent entre deux instants de saisie voisins en dessous de $\Delta a$ = 0, 8 m/s$^2$.

**9.** Procédé selon la revendication 7, **caractérisé en ce que** le résultat est revalorisé selon $\mu_{wam} = \min(\mu(t_i) + 0,5 ; 1)$ si les feux de détresse sont actionnés dans la limite d'une distance s = 100 m après la fin de l'événement évalué.

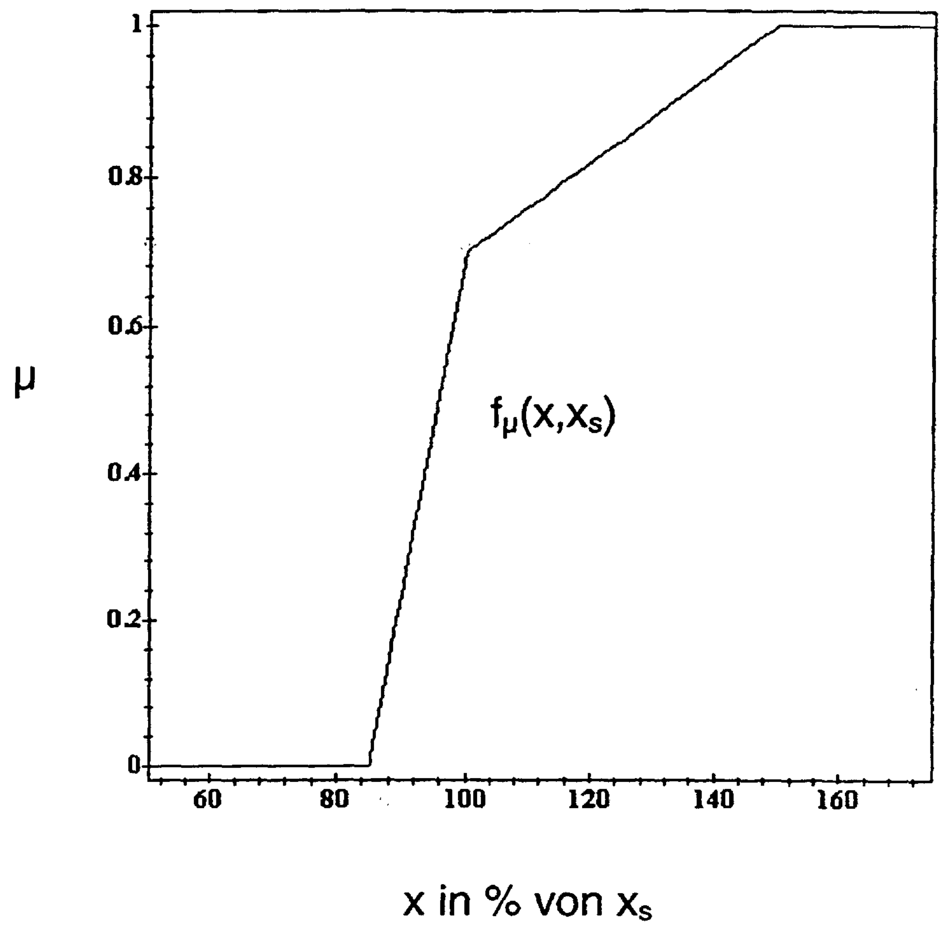


Fig. 1

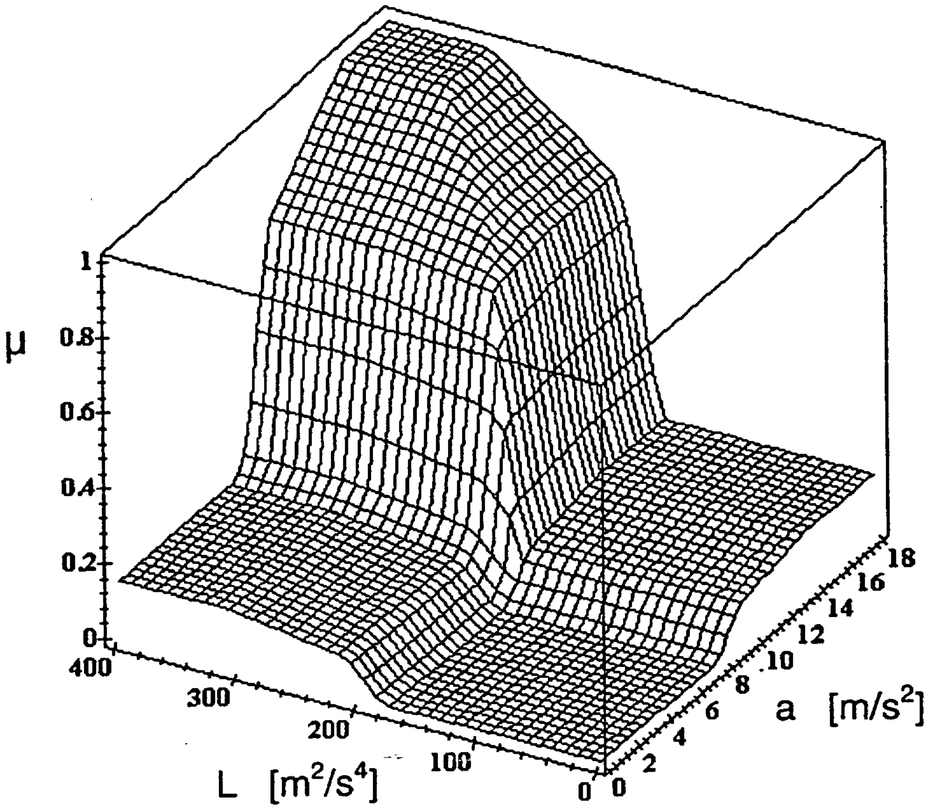


Fig. 2